# EUROPEAN PATENT APPLICATION

(11) **EP 4 672 026 A1**
(43) Date of publication of application: **31.12.2025**
(21) Application number: 25184227.4
(22) Date of filing: 20.06.2025
(51) Int. Cl.: G06F 16/3329, G06F 40/284, G06F 40/30, G06V 10/25

(54) **REGION OF INTEREST PROMPT PROCESSING FOR LARGE MULTIMODAL MODELS**

(30) Priority: 27.06.2024 US 202418757404
(71) Applicant: Microsoft Technology Licensing, LLC, Redmond, WA 98052 (US)
(72) Inventor: VERMA, Shubham, Redmond, Washington, 98052 (US); RAMANUJAN, Sanjay, Redmond, Washington, 98052 (US); KELKAR, Rakesh, Redmond, Washington, 98052 (US); KATARIA, Ashwini, Redmond, Washington, 98052 (US); TANEJA, Sagar, Redmond, Washington, 98052 (US)
(74) Representative: CMS Cameron McKenna Nabarro Olswang LLP

(57) **Abstract**

A method for processing a multimodal prompt. The method includes receiving a multimodal prompt including a media file and information related to a region of interest (ROI) of the media file. The method further includes determining a ROI of the media file based on the information related to the media file and generating a plurality of media tiles of interest associated with the ROI. The method further includes encoding the plurality of media tiles of interest and using a large multimodal model (LMM) to process the encoded plurality of media tiles of interest according to a natural-language input of the prompt to generate a response.

## Description

### BACKGROUND

Large multimodal models (LMMs) could be used to generate summary passages of various data sets and combinations of data sets. Multimodal models are machine learning models capable of processing information from different modalities, such as images, videos, text, and other data types. In some examples, LMMs analyze sets of different data types, such as images, audio, or other data, to provide a textual response to queries about them. When the summary passage, or response, pertains to an electronic media, the LMM processes the entirety of the media file in order to provide the summary passage. Often times, processing the entirety of the media file is not necessary or practical for providing the summary passages. Thus, in these scenarios, the computing cost for processing areas or regions of the media file that are not necessary for providing the desired summary are incurred, adding unnecessary cost for the user or provider. Additionally, the LMM unnecessarily uses processing power, as well as associated capacity mediums, on regions of the media file that are unnecessary for providing the summary passage.

### SUMMARY

The disclosed examples are described in detail below with reference to the accompanying drawing figures listed below. The following summary is provided to illustrate some examples disclosed herein.

Example solutions include architectures for processing a multimodal prompt. The architecture receives, by an orchestrator, a multimodal prompt from user interface communicatively coupled to the processor, the multimodal prompt including a media file, a natural-language input, and information related to a region of interest (ROI) of the media file. The orchestrator provides the natural-language input, the media file, and information related to the ROI to a view composer. The view composer uses a media processor to determine a ROI of the media file based on the information related to the ROI. The view composer uses the media processor to generate a plurality of media tiles of interest associated with the ROI and provides the plurality of media tiles of interest to the orchestrator. The media tiles are tokenized using a media encoder and the natural-language input is tokenized using the orchestrator. A large multimodal model (LMM) generates a response based on the tokenized plurality of media tiles and the tokenized text-based input and provides the response to orchestrator for delivery to a final destination.

### BRIEF DESCRIPTION OF THE DRAWINGS

The disclosed examples are described in detail below with reference to the accompanying drawing figures listed below:
FIG. 1 illustrates an example architecture for processing a region of interest (ROI) prompt;
FIG. 2 illustrates an exemplary (UI) employed by the examples of the architecture of FIG. 1;
FIGS. 3-5 illustrates exemplary ROI information and instructions types accessible by the UI of FIG. 2 and received by components of the architecture of FIG. 1;
FIG. 6 is a diagram illustrating operations of a view composer of the architecture of FIG. 1;
FIG. 7 is a diagram illustrating operations of an orchestrator of the architecture of FIG. 1;
FIG. 8 illustrates a response window of the UI of FIG. 2 including a natural-language response to a prompt provided to components of the architecture of FIG. 1;
FIGs. 9 and 10 are flowcharts illustrating exemplary operations that may be performed when using example architectures, such as the architecture of FIG. 1;
FIG. 11 illustrates an exemplary UI provided by the examples of the architecture of FIG. 1, according to another example of this disclosure; and
FIG. 12 illustrates a block diagram of an example computing device suitable for implementing some of the various examples disclosed herein.

Corresponding reference characters indicate corresponding parts throughout the drawings.

### DETAILED DESCRIPTION

Large language models (LLMs) could be used to generate summary passages of various data sets and combinations of data sets. These summary passages may be in response to a prompt or query, in some examples. When the prompt, or query, pertains to or includes media files, or data types other than textual input, a multimodal model is used to process the received information from different modalities. A multimodal model, or large multimodal model (LMM), processes the entirety of the media file in order to provide the summary passage or response, in the example where a media file is included in the prompt or query. Often times, processing the entirety of the media file is not necessary for providing the summary passage or response. However, the model has no way of delimiting the received file. Thus, in these scenarios, the user or provider of the model ultimately pays for processing of areas or regions of the media file that are not necessary for providing the desired summary or response. Additionally, the model unnecessarily consumes processing power on regions of the media file that are unnecessary for providing the summary passage or response.

Often business use cases require the model only to focus on limited areas or regions of the media file to produce a desired response. Aspects of the disclosure presented herein provide for a system and method for a query to indicate a region of interest (ROI) associated with the media file, generate a prompt based on the ROI and associated file, and enable the model receiving the prompt to focus computational resources on those specified regions rather than the entire media file, decreasing resource usage and cost without impacting the result. The system processes the received query with the indication of ROI, generates a prompt having a limited number of media tokens required for the ROI of the media file, and provides the prompt with the limited number of media tokens to the model for processing, reducing compute utilization, allowing for higher throughput, and providing lower latencies. Further, the system enables a query to include a greater number of media files per prompt, enabling the underlying computing model to support a longer prompt in terms of the number of media files and associated instructional text received.

As will be discussed in greater detail below, exemplary architectures and models disclosed herein allow for a query to specify a ROI of an associated file, such as an image file, video file, point cloud, audio file, and the like. The ROI indicated in the query is used by the system to segment the received file and identify sub-segments associated with the specified ROI. The sub-segments are then tokenized, or encoded, and a prompt is generated a limited set of tokens based on the ROI, which is sent to the model, such as a LMM. The prompt including the limited set of tokens enables the model to focus on the desired region(s) of the media file necessary to generate a response and therefore provide the numerous technical benefits mentioned above.

The various examples will be described in detail with reference to the accompanying drawings. Wherever preferable, the same reference numbers will be used throughout the drawings to refer to the same or like parts. References made throughout this disclosure relating to specific examples and implementations are provided solely for illustrative purposes but, unless indicated to the contrary, are not meant to limit all examples.

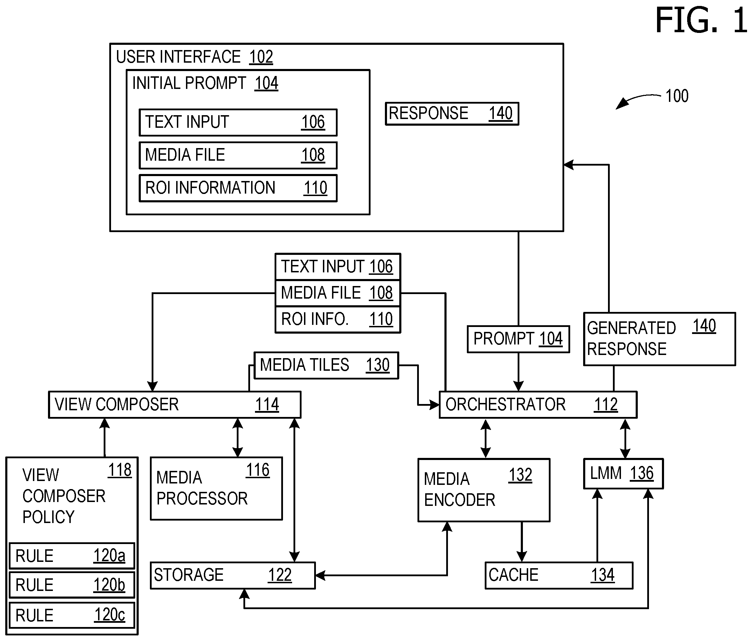

FIG. 1 illustrates an example architecture 100 that advantageously enables processing for a region of interest (ROI) prompt. Architecture 100 includes a user interface (UI) 102 that receives initial prompt 104. Initial prompt 104 includes text input 106, a media file 108, and region of interest (ROI) information 110 related to the media file 108. As will be discussed in greater detail below, the media file 108 can be, for example, an image file, an audio file, a video file, a point cloud, or any other suitable data type that is different from textual input. Text input 106 is natural-language instruction, for example, such as a user query or instructions associated with media file 108. In one illustrative example, text input 106 may include "explain what is happening in this image" associated with an image provided as media file 108.The ROI information 110 relates to a region of interest of the media file 108 associated with the text input 106, and can include information 310, 410, 510 as discussed in greater detail below. User interface 102 sends initial prompt 104 to an orchestrator 112, which modifies initial prompt 104 so that LMM 136 can more efficiently process the ROI.

Orchestrator 112 outputs various data of initial prompt 104 to a view composer 114, which is configured to process the media file 108 based on the ROI information 110 received. Orchestrator 112 parses the request payload associated with initial prompt 104 to determine if there is a media file present in prompt 104 and thereby determine if all or parts of prompt 104 are appropriate for delivering to view composer 114. In some examples, orchestrator 112 retains text input 106 and sends media file 108 and ROI information 110 to view composer 114. In some preferred examples, orchestrator 112 delivers text input 106 with media file 108 and ROI information 110 to view composer 114 so that view composer 114 can use text input 106 in processing media file 108, such as for example, in determining the region of interest of media file 108, as will be discussed in greater detail below. In some examples, view composer 114 uses a media processor 116 to process media file 108 and to generate a plurality of media tiles 130 for the media file 108 based on the ROI information 110 provided. In some examples, view composer 114 uses view composer policy 118 and the associated rules 120 to define an appropriate ROI for media file 108, and then proceeds in using media processor 116 to form the plurality of media tiles 130. As will be discussed in greater detail below, the media tiles can a global media tile 130a and also media tiles of interest (MTIs) 130b, 130c corresponding to the determined ROI. Although three rules 120 are illustrated, view composer policy 118 can comprise any number of rules 120. In various examples, storage 122 is used by view composer 114 to fetch or store custom media tiles or mapping tiles in generating the media tiles 130.

Orchestrator 112 receives media tiles 130 and tokenizes the tiles 130 with media encoder 132. Media encoder 132 returns to orchestrator 112 media tokens associated with each of the image tiles 130. The media tokens returned to orchestrator 112 can also be referred to herein as media embedding metadata or media embedding keys. Media encoder 132 can upload media embeddings to cache 134, which in some examples, is a Redis cache, which can later be recalled by LMM 136.

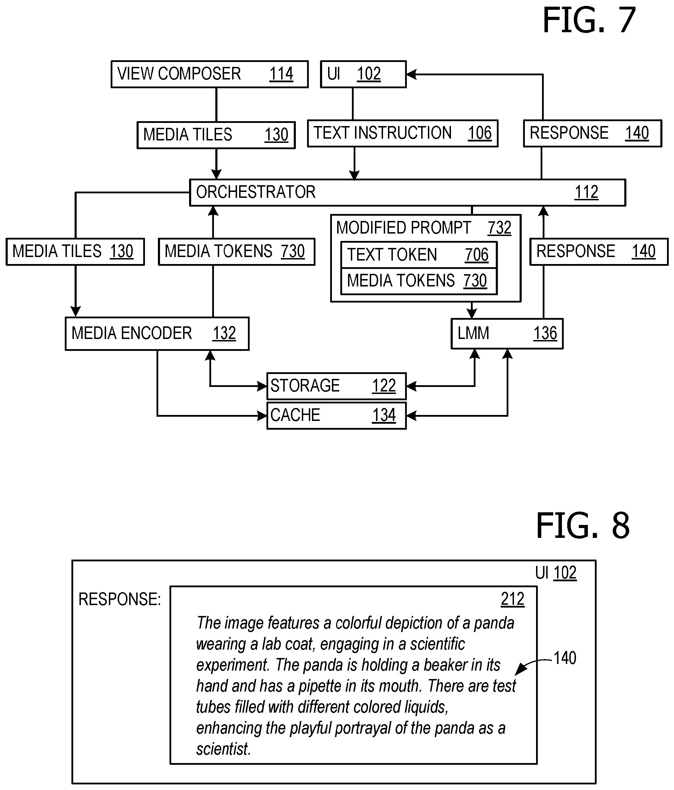

Orchestrator 112 generates text tokens from text input 106 and generates a modified prompt (such as modified prompt 732, discussed in greater detail in FIG. 7) including the media tokens and text tokens and delivers the modified prompt to LMM 136. LMM 136 generates a natural-language response 140 which is returned to orchestrator 112 and ultimately provides as a response 140 via user interface 102. According to various examples, response 140 is a natural-language or text-based response, as will be discussed in further detail. Various components of architecture 100 are implemented by a processor or multiple processors of one or multiple computing devices. Orchestrator 112, view composer 114, media processor 116, media encoder 132, and LMM 136, for example, are executable by one or more processors disclosed herein based on instructions stored to one or multiple memories disclosed herein.

As those with skill in the art will understand, LMMs (such as LMM 136) are advanced multimodal artificial intelligence models that can process numerous types of data modalities, such as, for example, text, images, 3D models, videos, audio and other diverse data types. Due to working in a multimodal environment, LMMs are able to integrate information of a prompt across numerous different data types in generating a response to the prompt. Those with skill in the art will recognize there are various LMMs currently developed, such as, for example, CLIP by OpenAI, Flamingo by DeepMind, and various other; and, according to some examples, LMM 136 can comprise these known models.

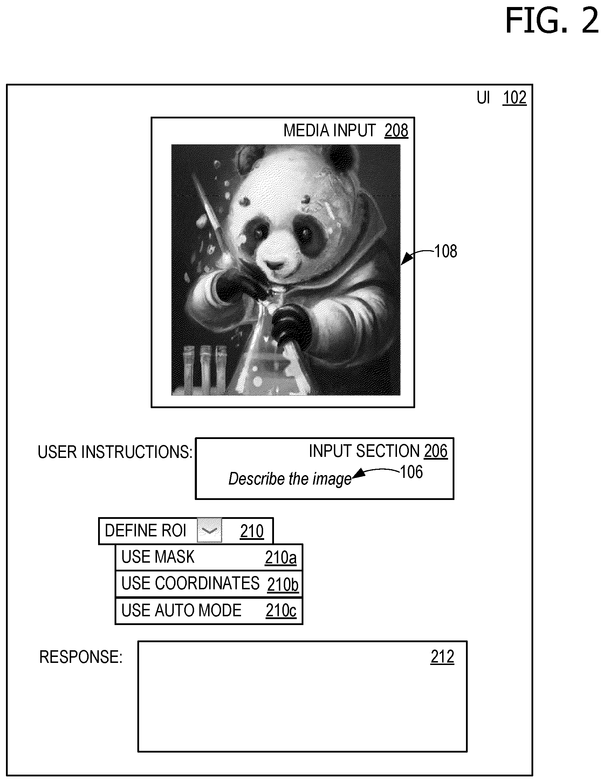

FIG. 2 illustrates an example of UI 102, according to an example of this disclosure. As shown, UI 102 includes a display of a computing device able to receive input, such as user input. UI 102 has a media input section 208 where the user identifies the media file 108 to be included in initial prompt 104. In some examples, UI 102 allows the user to load media file 108 to input section 208. However, in other examples, a user inputs a pointer, such as a URL, to input section 208 that directs the architecture 100 to a location of the media file 108 to be included in initial prompt 104. As shown, in some examples, media file 108 is a two-dimensional image file. However, as will be discussed in greater detail below, media file 108 can be any of a number of file types, such as, for example, a three-dimensional model file, a point cloud file, an audio file, a video file, or any other suitable media file type. UI 102 further includes an input section 206 where the user provides a natural-language or text-based text input 106 for initial prompt 104. In the example depicted, text input 106 provided by the user is to "describe the image", indicating the user wants architecture 100 to provide a description of media file 108. Although input section 208 is included as one example of how media file 108 is identified and included in initial prompt 104, those with skill in the art will understand that various examples are possible and fall within the scope of this disclosure. For example, media file 108 can be embedded in initial prompt body 104, such as, for example, as base64 encoded media bytes or as a URL link to storage hosting the media file.

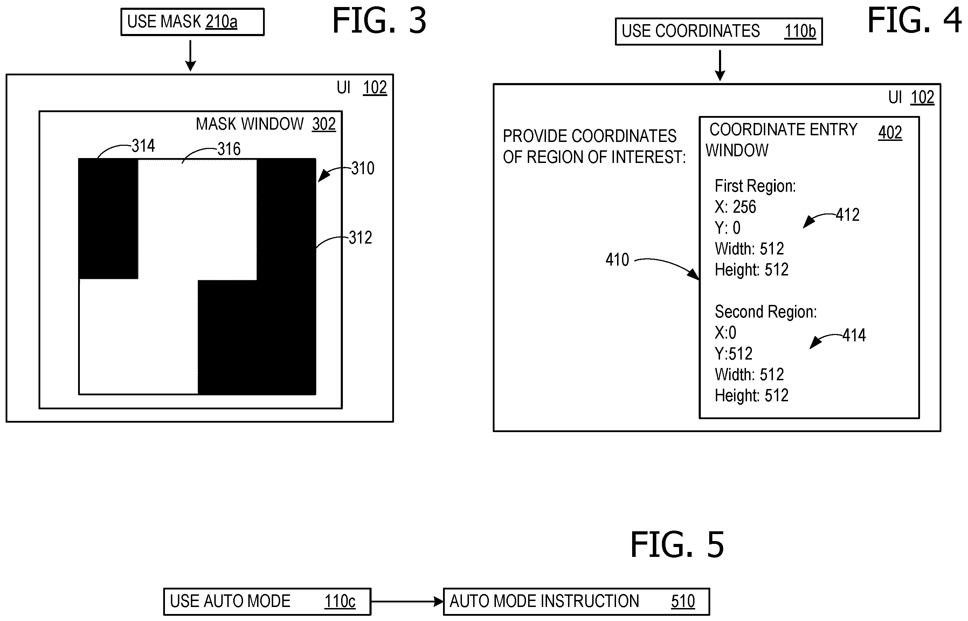

UI 102 further optionally includes a selection section 210 including different selectable options for the user to select in providing view composer 114 instruction in how the ROI of media file 108 is determined. The first selectable option from drop-down box 210 is use mask 210a, which is selectable by the user if the user wishes to provide or create ROI masking information for view composer 114 to use in determining the ROI of media file 108. Masking information 310 will be discussed in greater detail in FIG. 3. The second selectable option from selection section 210 is use coordinates 210b, which is selectable by the user if the user wishes to provide coordinate information for view composer 114 to use in determining the ROI of media file 108. Coordinate information 410 will be discussed in greater detail in FIG. 4. The third selectable option from selection section 210 is use auto mode 210c, which is selectable by the user if the user wishes to provide instruction information to view composer 114 to automatically determine the ROI of media file 108. Auto mode instruction information 510 will be discussed in greater detail in FIG. 5. Additionally, UI 102 includes a response section 212 where response 140 to initial prompt 104 is provided or presented to the user after the media file 108 has been processed.

FIG. 3 illustrates mask section 302 which is displayed on UI 102 in response to the user selecting use mask option 210a. In section 302, the user can provide or define mask information 310 to be used by view composer 114 in defining the ROI of media file 108. As shown, mask information 310 includes darkened regions 312, 314 and a transparent region 316. As will be described in greater detail below, darkened regions 314 are configured to block various corresponding regions of media file 108 from analysis by view composer 114 and focus view composer 114 on regions of image file corresponding with and visible by transparent region 316. According to various examples, the user uploads a preexisting mask file for masking information 310. According to various examples, the user defines the masking information within section 302, such as by drawing or otherwise illustrating the various regions 312-316 within section 302. Although one transparent region 316 is depicted, those with skill in the art will understand that there can be more than one transparent region without departing from the scope of this disclosure, and transparent region 316 can comprise any shape according to a desired ROI for the media file 108. Although two darkened regions 312, 314 are depicted, those with skill in the art will understand that there can be more or less than two darkened regions without departing from the scope of this disclosure, and the darkened regions 314, 316 can comprise any shape according to a desired ROI for the media file 108.

FIG. 4 illustrates coordinate section 402 which is displayed on UI 102 in response to the user selecting use mask option 210a. In section 402, the user inserts coordinate information 410 related to the ROI of media file 108. As shown, in some examples, coordinate information comprises pixel coordinate information corresponding to the two-dimensional pixel grid of the image file 108. As shown, coordinate information 410 can contain coordinate information for multiple regions of the media file 108 associated with the ROI. As shown, as part of coordinate information 410, the user has defined first region coordinate information 412 and second region coordinate information 414. As will be described in greater detail below, coordinate information 414, 412 are coordinates of media file 108 for view composer 114 to use in defining the ROI associated with the ROI. While FIGs. 3 and 4 illustrate two types of user-provided information 310, 410 related to the ROI, those with skill in the art will understand that various other types of user-provided information can be provided as part of ROI information 110. For example, in addition to mask 310 and coordinate information 410, ROI information 110 can be specified by the user providing a single point associated with media file 108 or via a set of sequence of image transformations. Mask information 310 and coordinate information 410 can be referred to herein as defined ROI parameters, as they include information or data that is provided by the user and are parameters for the view composer to use in defining the ROI, as will be discussed in greater detail below.

FIG. 5 illustrates the information provided to view composer 114 in response to the user selecting use auto mode 210c. Specifically, auto mode instruction information 510 is generated and delivered to view composer 114, instructing view composer 114 to automatically determine the ROI of the media file using one or more ROI policies in an "auto mode", without any additional user-provided information, as will be discussed in greater detail below.

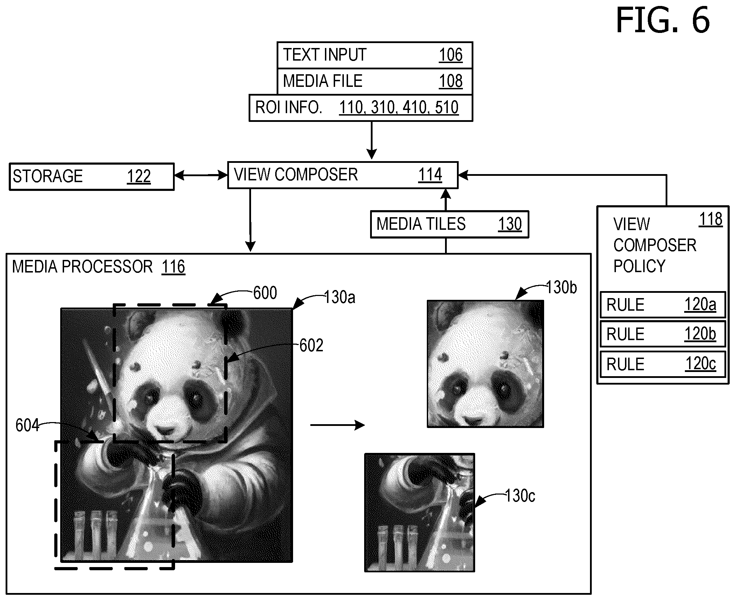

FIG. 6 is a diagram illustrating operations performed by view composer 114. Specifically, as mentioned in in FIG. 1, from initial prompt 104, orchestrator 112 sends media file 108 and ROI information 110, 310, 410, 510 to view composer 114, and view composer 114 sends media file 108 and ROI information 110, 310, 410, 510 to media processor 116 for ROI processing. Media processor 116 takes media file 108 and generates a global media tile 130a encompassing the entirety or a global version of the available data of media file 108. Media processor 116 applies ROI information 110, 310, 410, 510 to determine the ROI 600 of media file 108, illustrated with dashed lines in FIG. 6. The ROI 600 is determined according to and corresponds with the ROI information 110, 310, 410, 510. As shown, in the illustrated example, ROI 600 comprises two generally rectangular regions 602, 604.

In examples where the user enters mask information 310 as the ROI information, the ROI regions 602, 604 (and thus the entire ROI 600) correspond with the transparent region 316 of the mask. That is, effectively, the processor 116 applies the mask 310 over the global tile 130a and any part of global tile 130a exposed through transparent region 316 is part of the ROI 600, and any part of global tile 130a covered by darkened regions 312, 314 is excluded from the ROI 600.

In examples where the user enters coordinate information 410 as the ROI information, the ROI regions 602, 604 (and thus the entire ROI 600) correspond with region information entered in coordinate entry window 402. Specifically, ROI regions 602, 604 correspond with the pixel coordinate information entered as first and second region information 412, 414, respectively. Accordingly, ROI 600 is defined based on the specified region information 410 entered by the user when mapped out on global tile 130a.

In examples where the user selects auto mode option 210c and thus provides auto mode activation instruction 510 as the ROI information, the ROI regions 602, 604 (and thus the entire ROI 600) correspond to analysis performed by view composer 114 in response to receiving the activation instructions 510. View composer 114 can use text input 106 in determining ROI 600. For example, text input 106 may provide instructions on certain regions or objects of media file 108 on which to focus for analysis, and thus use input 106 to determine the appropriate ROI 600. Additionally, view composer 114 can access view composer policy 118 and associated rules 120 in determining the ROI 600. As an illustrative example, one of the rules 120 may define certain patches or sections of global tile 130a as low-value patches, and that low-value patches are to be excluded from the ROI 600. For example, a low-value patch of global tile 130a may be a patch in which there is little-to-no contrast in color, i.e., the entire patch is the same, or almost the same, color. As those with skill in the art will appreciate and understand, rules like this identify mono-color features or textures such as, for example, a blue sky or green grass, and removes them from the ROI 600 so that the LMM 136 only focuses on the most relevant parts of global tile 130a, as will be discussed in greater detail below.

Those with skill in the art will recognize various similar rules that can be utilized by view composer 114 in determining a region of interest. For example, one of the rules 120 can direct view composer 114 to exclude any tiles or patches from the ROI 600 that have an average sum of pixels less than a threshold. For example, one of the rules 120 can direct view composer 114 to include any tiles or patches in ROI 600 that include faces, and can employ and face detector algorithm for recognizing faces in the media file. For example, one of the rules 120 can direct view composer 114 to exclude any tiles or patches from the ROI 600 that have a total number of edge pixels above a threshold, and can employ known edge detector programs in making this determination. For example, when media file 108 is an audio file, a rule 120 can be for view composer 114 to eliminate any part of the audio file with audio values below a certain threshold from the ROI (i.e. silent parts of the audio file are not included in the ROI).

From the ROI 600, media processor 116 generates media tiles of interest (MTIs) 130b, 130c. As shown, the MTIs 130b, 130c correspond to the ROI 600. Specifically, MTI 130b corresponds to region 602 and MTI 130c corresponds to region 604. Although in the example shown, media processer 116 uses two MTIs 130b, 130c for the ROI 600, according to various examples, processor 116 generates more or less than two MTIs for the ROI. After MTIs 130b, 130c are generated, the media tiles 130 are sent from media processor 116 to view composer 114 for, ultimately, forwarding to LMM 136, as mentioned in FIG. 1 and will be discussed in greater detail in FIG. 7. In some examples, the media processor 116 only sends MTIs 130b, 130c to view composer 114. In some examples, the media processor 116 sends MTIs 130b, 130c as well as global tile 130a to view composer 114. Included in each of the MTIs 130b, 130c is metadata that defines each MTI's 130b, 130c location in the global media tile 130a in relation to the other MTIs 130b, 130, and which can be used my LMM 136 in generating response 140. View composer 114 is communicatively coupled with storage 122 with which it can fetch various data related to determining the ROI 600 and MTIs 130b, 130c, such as, for example, mapping files and custom media tiles. View composer can also store various data, such as, for example the mapping files and custom media tiles in storage 122 for future its own future use, and/or for use by media encoder 132 and LMM 136.

Custom media tiles kept in storage 122 can be tiles that represent any images depicted in media files processed by processor 116. For example, in keeping with examples already discussed herein, one custom media tile kept on storage 122 can be an image of grass. View composer 114 can return to orchestrator 112 metadata, such as a mapping tile stored to storage 122 that corresponds with the grass custom media tile, that there are one or more media tiles of media file 108 that look similar to the grass custom media tile on storage 122. The mapping tile can be formed by pre-computing the tokenized version of the custom media tile and kept on storage 122. Thus, encoder 132 can skip tokenization if it receives reference to the grass mapping tile, and simply fetch the mapping tile from storage 122 and cache it at cache 134. Accordingly, processing/compute usage can be saved using mapping tiles. LMM 136 can fetch mapping tiles directly from cache 134 or from storage 122 for forming response 140.

FIG. 7 is a diagram illustrating operations of LMM 136 and its associated orchestrator 112. After media tiles 130 are generated by view composer 114, the media tiles 130 are sent to orchestrator 112. Orchestrator 112 sends the media tiles 130 to media encoder 132 for tokenizing, and encoder 132 returns to orchestrator 112 media tokens 730 corresponding to the provided media tiles 130. In generating media tokens 730, media encoder 132 can upload to cache 134 media embedding associated with the media tokens 730. In generating media tokens 730, media encoder 132 can fetch custom tiles from storage 122. Those with skill in the art will recognize that media encoder 132 can comprise any of a number of known media encoders or tokenizers, such as, for example, SoundStream, VideoGPT, VQ-VAE, and various other known media or multimodal encoders or tokenizers used for tokenizing the various data modality types discussed herein. Additionally, in some examples, encoder 132 is included as part of the LMM 136 utilized as part of architecture 100.

As mentioned in FIG. 1, orchestrator 112 retains text input 106 from initial prompt 104. In some examples, orchestrator 112 tokenizes text input 106 to generate text token 706 associated with text input 106. In some examples, along with generating media token 730, media encoder 132 also tokenizes text input 106 to generate text token 706. Orchestrator 112 generates a modified prompt 732 that includes text token 706 and media tokens 730 and delivers modified prompt 732 to LMM 136 for generating response 140. LMM 136 processes the instruction from text token 706 and interprets media token 730 accordingly to provide response 140. In generating response 140, LMM 136 can fetch the media embeddings associated with media tokens 730 from cache. In generating response 140, LMM 136 can fetch custom tiles from storage 122. Referring to FIG. 8 along with FIG. 7, the response 140 is delivered to orchestrator 112, and then delivered from orchestrator 112 to UI 102 and is displayed in response section 212. As shown, response 140 is a description of media file 108 and responsive to text input 106. Although a natural-language type of response 140 has been discussed and illustrated, those with skill in the art will understand that various other examples fall within the scope to this disclosure, and response 140 is not limited to a natural-language or text response. The type of response 140 generated can be based on text input 106. For example, response 140 can be a modified or altered version of media file 108. For example, text input 106 can be an instruction to provide a portion of media file 108 focused on certain objects of file 108, and response 140 can be a modified version of media file 108, modified according to the text input 106. Those with skill in the art will understand various other response types fall within the scope of this disclosure.

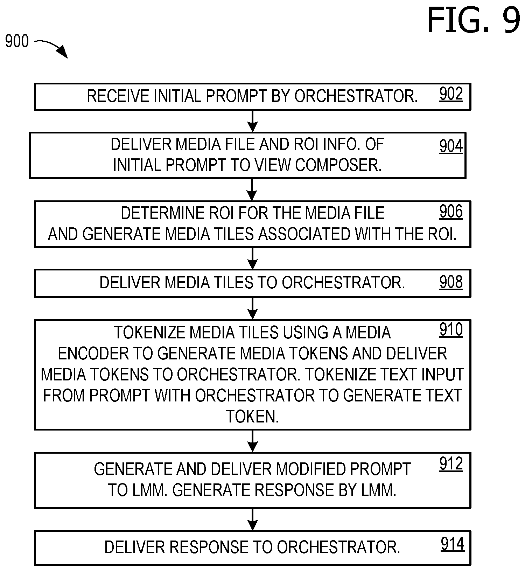

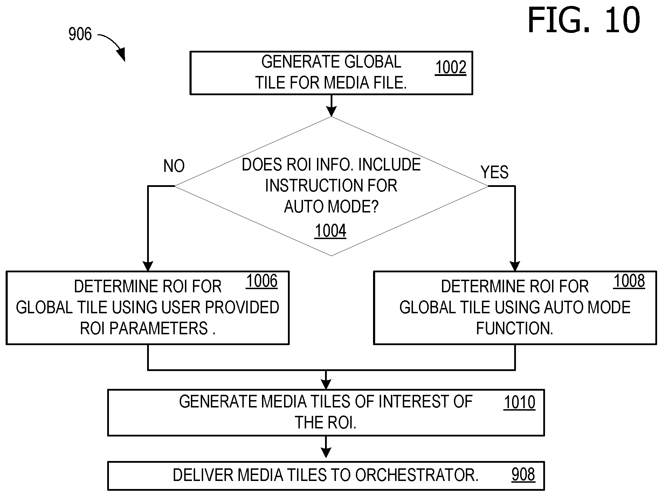

FIG. 9 illustrates a method 900 operable by architecture of this disclosure, such as architecture 100. Method 900 is a method of processing a multimodal prompt including a media file, such as initial prompt 104, and returning a natural-langue response, such as response 140, responsive to the prompt. Method 900 can begin at block 902 where orchestrator 112 receives initial prompt 104 from UI 102. Specifically, a user uses UI 102 to create initial prompt 104, and initial prompt 104 includes natural-language text input 106, media file 108, and ROI information110. Initial prompt 104 can be referred to as a multimodal prompt because, in various examples, initial prompt 104 includes a combination of multiple input format types, such as, for example, media file 108 and text input 106. In other examples, initial prompt 104 can include additional inputs of diverse data types. ROI information 110 can include for example, mask information 310, coordinate information 410, or auto mode instruction 510. Method 900 can continue to block 904 by orchestrator 112 delivering media file 108 and ROI information 110 to view composer 114. As discussed, in some examples, orchestrator 112 retains natural-language text input 106 of initial prompt 104 for further processing, as discussed above and will be discussed in further detail in method 900. In some examples, block 904 includes sending text input 106 to view composer 114 for view composer 114 to use in determining ROI 600. Method 900 continues to block 906 by view composer 114 determining the ROI 600 for the media file 108 and associated tiles 130 associated with the media file 108 ROI 600, such as global tile 130a and MTIs 130b, 130c. Operations taken by view composer 114 in block 906 are discussed in greater detail in FIG. 10.

Method 900 continues to block 908 by view composer 114 delivering the generated media tiles 130 to orchestrator 112. In some examples, only MTIs 130b, 130c are delivered to orchestrator 112. In some preferred examples, MTIs 130b, 130c and global tile 130a are delivered to orchestrator 112. Method 900 continues to block 910 where media tiles 130 and text input 106 are tokenized. Specifically, media tiles 130 are delivered by orchestrator 112 to encoder 132 for tokenizing, and encoder 132 returns to orchestrator 112 media tokens 730 associated with the provided media tiles 130. Block 910 further includes, in some examples, orchestrator 112 tokenizing natural-language text input 106 to form text token 706 associated with text input 106. In some examples of block 910, media encoder 132 tokenizes natural-language text input 106 to form text token 706. Method 900 can continue to block 912 by orchestrator 112 generating and delivering modified prompt 732, including text token 706 and media tokens 730, to LMM 136. There, LMM 136 generates response 140 based on the tokens 730, 706 that is responsive to initial prompt 104. Method 900 can continue to block 914 where response 140 is delivered from LMM 136 to orchestrator 112. From there, in some examples, response 140 is ultimately delivered to and presented or displayed in response window 212 of UI 102.

Although method 900 is described as comprising blocks 902 - 914, those with skill in the art will understand that blocks can be added or taken away from method 900 without departing from the scope of this disclosure. Further, although blocks 902-914 are discussed as occurring in a certain order, the blocks of method 900 can be performed according to various other orders without departing from the scope of this disclosure.

FIG. 10 illustrates operations performed by view composer 114 in performing block 906, introduced in method 900, in which view composer 114 determines the ROI 600 for media file 108 and associated media tiles 130. Block 906 can begin at block 1002 by generating global tile 130a for image file 108. View composer 114 can then proceed to block 1004 where view composer 114 determines whether the ROI information 110 received includes instructions for performing auto mode, such as auto mode instruction 510. In response to determining that there is no auto mode instruction 501, such as if the ROI info 110 includes mask information 310 or coordinate information 410, view composer 114 can proceed to block 1006. In block 1006, view composer 114 uses the mask information 310, coordinate information 410, or any other type of user-defined ROI parameter information to determine ROI 600 of global tile 130a. Alternatively, in response to determining there is an auto mode instruction 501 as the ROI information, view composer proceeds to block 1008 from block 1004. In block 1008 view composer 114 determines the ROI 600 using global tile 130a, text instruction 106, and view composer policy 118. After generating the ROI 600 in either block 1006 to 1008, view composer 114 proceeds to block 1010 by generating MTIs 130b, 130c based on and corresponding to the ROI 600. From there, view composer 114 proceeds to block 908, which was described in FIG. 9.

Although operation 906 is described as comprising blocks 1002 - 1010, those with skill in the art will understand that blocks can be added or taken away from operation 906 without departing from the scope of this disclosure. Further, although blocks 1002 - 1010 are discussed as occurring in a certain order, the blocks of operation 906 can be performed according to various other orders without departing from the scope of this disclosure.

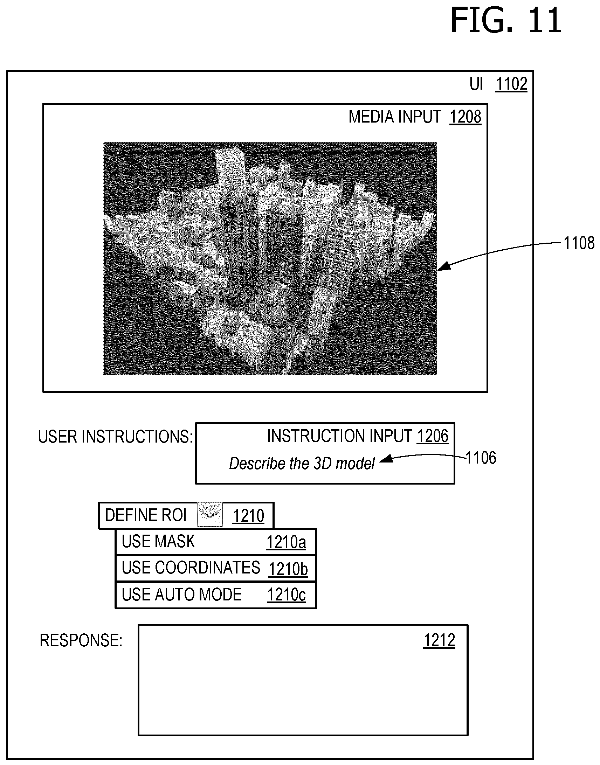

FIG. 11 illustrates a UI 1102 employed by a user when using the examples of the architecture 100, according to another example of this disclosure. While media files 108 herein have largely been described using a two-dimensional image media file, those with skill in the art will understand that architecture 100 can process prompts including various different types of media file types. Further, in some examples, instead of an actual media file the prompt can instead include a file pointer, such as a URL, directing the architecture 100 to the media or media files for the prompt.

FIG. 11 illustrates one such example of an alternate example, where instead of a two-dimensional image, the prompt includes three-dimensional (3D) model file 1108. 3D model 1108 can comprise any of various known 3D file types, such as, for example, cloud point models, computer animated design (CAD) models, and the like. Those with skill in the art will recognize UI 1102 is substantially similar to UI 102 previously discussed. A user provides 3D model 1108 to media input section 1208, substantially the same as input section 208 previously discussed. The user enters a natural-language text input 1106 (substantially the same as text input 106) into input section 1206 (substantially the same as section 206). As shown, the text input 1106 given to the prompt is to describe the 3D model 1108.

UI 1102 further includes ROI information selection section 1210 (substantially the same as selection section 210) displaying to the user different options for providing ROI information. As shown, available to the user are use mask option 1210a (substantially the same as option 210a), use coordinate option 1210b (substantially the same as option 210b), and use auto mode option 1210c (substantially the same as option 210c). Those with skill in the art will recognize how the operations for providing ROI information for 3D model 1108 correlate with the descriptions discussed previously in detail. Specifically, by selecting use mask option 1210a, the user can provide a three-dimensional mask to apply to 3D model 1108, where the mask covers various 3D sections of the model 1108 that are not desired for the ROI, substantially similar to the darkened regions 312, 314 previously discussed, except being darkened regions in three-dimensions rather than two-dimensions. Similarly, by selecting use coordinate option 1210b, the user can provide three-dimensional coordinates corresponding to a desired ROI for 3D model 1108, substantially similar to region data 412, 414 previously discussed, except being coordinates on a three-dimensional coordinate axis rather than a two-dimensional coordinate axis. Similarly, by selecting use auto mode option 1210c, the user can provide instructions to view composer 114 to automatically generate the ROI for model 1108, substantially similar to instructions 510 previously discussed. For 3D model 1108, view composer 114 can use rules 120 of view policy 118 substantially similar to rules previously discussed in determining the ROI, as well as various data stored in storage 112, as previously discussed. For example, instead of using rules 120 related to two-dimensional image processing, view composer 114 uses rules 120 related to 3D model processing for determining an appropriate three-dimensional ROI for 3D model 1108. Additionally, UI 1102 includes response window 1212 (substantially the same as window 212) for displaying a response to the prompt returned to UI 1102 from LMM 136, substantially the same as response 140. In some examples, LMM 136 can comprise any one of various known models for interpreting and processing three-dimensional models, such as, for example, 3D-LLMs, CLIP2Scene, PointLLM and various others.

FIG. 11 illustrates just one of multiple different media types that can be included in a multimodal prompt for architecture 100. For example, in some examples, the media file type can be an audio or video file. Similar to what has been described, the user can use a mask to block out certain portions of the audio or video file for defining the ROI of the audio or video file. Similar to what has been described, the user can use coordinates, such as timestamps, for example, to define certain portions of the audio or video file to be included in and/or excluded the ROI. Additionally, according to some examples, an initial prompt can include multiple media files 108, and each media file can include its own text input 106 and own ROI information 110.

Those with skill in the art will recognize various scenarios and applications that can utilize the architectures described herein. For example, for search engine or social media applications, if a user shows interest in images or videos related to a certain subject, such as cooking, for example, the architecture herein can process media at scale from different content creators or websites to generate tags to help match the user with cooking content of interest. For gaming applications and engines hosting multiple users, dialog generation is currently out of reach in many scenarios, as there are too many images to process from the different viewpoints of the various users. The architectures herein can be used to focus on the appropriate regions of interest in these gaming scenarios to accomplish efficient dialog generation. Additionally, the architectures herein can be used for medical record or image processing. For example, doctors and other healthcare professionals can use the architectures to focus image analysis on specified regions of medical records, x-rays, MRIs, and other medical imaging technologies. Additional examples of where the architectures herein can be utilized include virtual reality applications, security footage applications, stock market monitoring application, and applications for organizing photos stored on a user's phone or personal electronic device. While some exemplary applications of the architectures herein have been described, those with skill in the art will understand that various other applications fall within the scope of this disclosure.

In a first embodiment a system is defined. The system comprises a processor; and a memory including instructions executable by the processor to: receive a multimodal prompt including a media file and information related to a region of interest (ROI) of the media file; determine the ROI of the media file based on the information related to the ROI of the media file, wherein the ROI of the media file is smaller than a global version of the media file; generate a plurality of media tiles of interest (MTIs) associated with the ROI of the media file; encode the MTIs together with a natural-language input received with the multimodal prompt to generate a modified prompt; send the modified prompt to a large multimodal model (LMM) to process the modified prompt; and receive a response to the modified prompt from the LMM.

In a first example of the first embodiment, the information related to the ROI comprises one of: defined ROI parameters; and instructions for automatically determining the ROI of the media file using one or more ROI policies.

In a first instance of the first example, the defined ROI parameters includes one of: mask information defining the ROI of the media file; and coordinate information defining the ROI of the media file.

In a second instance of the first example, the system further comprises instructions executable by the processor to: apply the defined ROI parameters to a global tile associated with the media file to determine the ROI of the media file; and generate the plurality of MTIs based on the determined ROI.

In a third instance of the first example, the system further comprises instructions executable by the processor to: access a view composer policy storing a plurality of rules, wherein at least some of the plurality of rules instruct the view composer to exclude low-value regions of the media file in the ROI; apply the plurality of rules to a global tile associated with the media file to determine the ROI of the media file; and generate the plurality of MTIs based on the determined ROI.

In a first case of the third instance of the first example the media file is an image file; and at least some of the low-value regions are defined as a region of the global media tile containing little-to-no contrast in color or texture.

In a second example of the first embodiment, the media file is an image file; and the memory further comprises instructions executable by the processor to present the response via a user interface, the response being a natural-language description of the image depicted in the image file.

In a second embodiment a method for processing a multimodal prompt is defined. The method comprises receiving a multimodal prompt including a media file and information related to a region of interest (ROI) of the media file; determining the ROI of the media file based on the information related to the media file, wherein the ROI of the media file is smaller than a global version of the media file; generating a plurality of media tiles of interest (MTIs) associated with the ROI of the media file; encoding the MTIs together with a natural-language input received with the multimodal prompt to generate a modified prompt; and sending the modified prompt to a large multimodal model (LMM) to process the modified prompt; and receiving a response to the modified prompt from the LMM.

In a first example of the second embodiment, the information related to the ROI comprises one of: defined ROI parameters; and instructions for automatically determining the ROI of the media file using one or more ROI policies.

In a first instance of the first example, the defined ROI parameters includes one of: mask information defining the ROI of the media file; and coordinate information defining the ROI of the media file.

In a second instance of the first example, in response to determining that the information related to the ROI comprises the defined ROI parameters, the method further includes: applying the defined ROI parameters to a global tile associated with the media file to determine the ROI of the media file; and generating the plurality of MTIs based on the determined ROI.

In a third instance of the first example, in response to determining that the information related to the ROI comprises the instructions for performing ROI auto mode, the method further comprises: accessing a view composer policy storing a plurality of rules, wherein at least some of the plurality of rules instruct the view composer to exclude low-value regions of the media file in the ROI; applying the plurality of rules to a global tile associated with the media file to determine the ROI of the media file; and generating the plurality of MTIs based on the determined ROI.

In a first case of the third instance of the first example, the media file is an image file; and at least some of the low-value regions are defined as a region of the global media tile containing little-to-no contrast in color or texture.

In a second example of the second embodiment, the media file is an image file; and the method further includes displaying the response via a user interface, the response being a natural-language description of the image depicted in the image file.

In a third embodiment a computer-readable medium storing instructions is defined. The instructions are operative upon execution by a processor to: receive, at a large multimodal model (LMM) orchestrator, a multimodal prompt including a media file, a natural-language input, and information related to a region of interest (ROI) of the media file; determine, by a view composer, the ROI of the media file based on the information related to the ROI of the media file, wherein the ROI of the media file is smaller than a global version of the media file; generate, by the view composer, a global media tile and a plurality of media tiles of interest (MTIs) associated with the ROI; send, by the LMM orchestrator, the global media tile and the plurality of MTIs generated by the view composer to a media encoder; receive, by the LMM orchestrator, a plurality of media tokens generated from the global media tile and the plurality of MTIs from the media encoder; encode, by the LMM orchestrator, the natural-language input to generate a text token associated with the natural-language input; generate, by the LMM orchestrator, a modified prompt including the plurality of media tokens and the text token; send, by the LMM orchestrator, the modified prompt to the LMM to process the modified prompt according to the plurality of media tokens and the text token; and receive, by the LMM orchestrator, a response to the modified prompt from the LMM.

In a first example of the third embodiment, the information related to the ROI comprises one of: defined ROI parameters; and instructions for automatically determining the ROI of the media file using one or more ROI policies.

In a first instance of the first example, the defined ROI parameter includes one of: mask information defining the ROI of the media file; and coordinate information defining the ROI of the media file.

In a second instance of the first example, the computer-readable medium further includes instructions operative upon execution by the processor to: apply the defined ROI parameters to a global tile associated with the media file to determine the ROI of the media file; and generate the plurality of MTIs based on the determined ROI.

In a third instance of the first example, the computer-readable medium further includes instructions operative upon execution by the processor to: access a view composer policy storing a plurality of rules, wherein at least some of the plurality of rules instruct the view composer to exclude low-value regions of the media file in the ROI; apply the plurality of rules to a global tile associated with the media file to determine the ROI of the media file; and generate the plurality of MTIs based on the determined ROI.

In a first case of the third instance of the first example, the media file is an image file; and at least some of the low-value regions are defined as a region of the global media tile containing little-to-no contrast in color.

A further embodiment relates to a method for processing a multimodal prompt. The method includes receiving a multimodal prompt including a media file and information related to a region of interest (ROI) of the media file. The method further includes determining a ROI of the media file based on the information related to the media file and generating a plurality of media tiles of interest associated with the ROI. The method further includes encoding the plurality of media tiles of interest and using a large multimodal model (LMM) to process the encoded plurality of media tiles of interest according to a natural-language input of the prompt to generate a natural-language response.

### Example Operating Environment

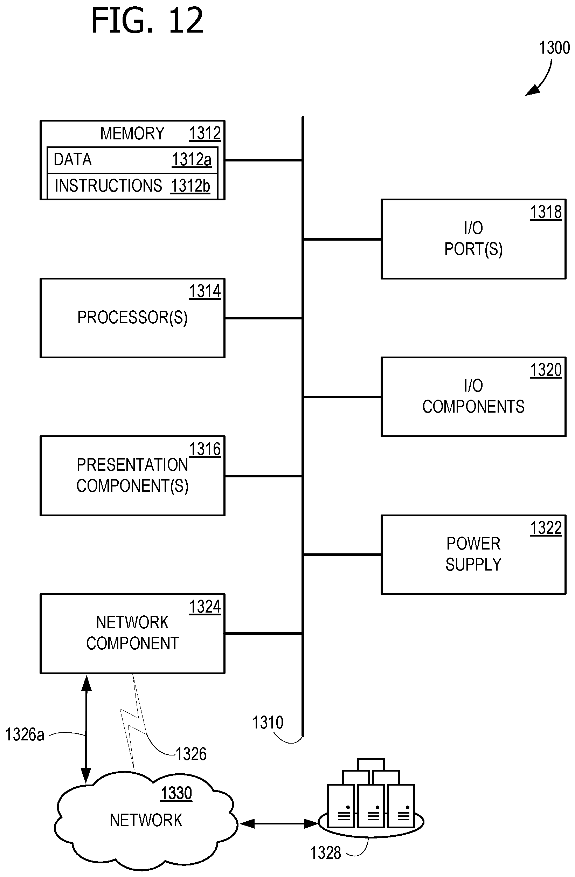

FIG. 12 is a block diagram of an example computing device 1300 (e.g., a computer storage device) for implementing aspects disclosed herein, and is designated generally as computing device 1300. In some examples, one or more computing devices 1300 are provided for an on-premises computing solution. In some examples, one or more computing devices 1300 are provided as a cloud computing solution. In some examples, a combination of on-premises and cloud computing solutions are used. Computing device 1300 is but one example of a suitable computing environment and is not intended to suggest any limitation as to the scope of use or functionality of the examples disclosed herein, whether used singly or as part of a larger set.

Neither should computing device 1300 be interpreted as having any dependency or requirement relating to any one or combination of components/modules illustrated. The examples disclosed herein may be described in the general context of computer code or machine-useable instructions, including computer-executable instructions such as program components, being executed by a computer or other machine, such as a personal data assistant or other handheld device. Generally, program components including routines, programs, objects, components, data structures, and the like, refer to code that performs particular tasks, or implement particular abstract data types. The disclosed examples may be practiced in a variety of system configurations, including personal computers, laptops, smart phones, mobile tablets, hand-held devices, consumer electronics, specialty computing devices, etc. The disclosed examples may also be practiced in distributed computing environments when tasks are performed by remote-processing devices that are linked through a communications network.

Computing device 1300 includes a bus 1310 that directly or indirectly couples the following devices: computer storage memory 1312, one or more processors 1314, one or more presentation components 1316, input/output (I/O) ports 1318, I/O components 1320, a power supply 1322, and a network component 1324. While computing device 1300 is depicted as a seemingly single device, multiple computing devices 1300 may work together and share the depicted device resources. For example, memory 1312 may be distributed across multiple devices, and processor(s) 1314 may be housed with different devices.

Bus 1310 represents what may be one or more buses (such as an address bus, data bus, or a combination thereof). Although the various blocks of FIG. 12 are shown with lines for the sake of clarity, delineating various components may be accomplished with alternative representations. For example, a presentation component such as a display device is an I/O component in some examples, and some examples of processors have their own memory. Distinction is not made between such categories as "workstation," "server," "laptop," "hand-held device," etc., as all are contemplated within the scope of FIG. 12 and the references herein to a "computing device." Memory 1312 may take the form of the computer storage media referenced below and operatively provide storage of computer-readable instructions, data structures, program modules and other data for the computing device 1300. In some examples, memory 1312 stores one or more of an operating system, a universal application platform, or other program modules and program data. Memory 1312 is thus able to store and access data 1312a and instructions 1312b that are executable by processor 1314 and configured to carry out the various operations disclosed herein. Thus, computing device 1300 comprises a computer storage device having computer-executable instructions 1312b stored thereon.

In some examples, memory 1312 includes computer storage media. Memory 1312 may include any quantity of memory associated with or accessible by the computing device 1300. Memory 1312 may be internal to the computing device 1300 (as shown in FIG. 10), external to the computing device 1300 (not shown), or both (not shown). Additionally, or alternatively, the memory 1312 may be distributed across multiple computing devices 1300, for example, in a virtualized environment in which instruction processing is carried out on multiple computing devices 1300. For the purposes of this disclosure, "computer storage media," "computer storage memory," "memory," and "memory devices" are synonymous terms for the memory 1312, and none of these terms include carrier waves or propagating signaling.

Processor(s) 1314 may include any quantity of processing units that read data from various entities, such as memory 1312 or I/O components 1320. Specifically, processor(s) 1314 are programmed to execute computer-executable instructions for implementing aspects of the disclosure. The instructions may be performed by the processor, by multiple processors within the computing device 1300, or by a processor external to the client computing device 1300. In some examples, the processor(s) 1314 are programmed to execute instructions such as those illustrated in the flow charts discussed below and depicted in the accompanying drawings. Moreover, in some examples, the processor(s) 1314 represents an implementation of analog techniques to perform the operations described herein. For example, the operations may be performed by an analog client computing device 1300 and/or a digital client computing device 1300. Presentation component(s) 1316 present data indications to a user or other device. Exemplary presentation components include a display device, speaker, printing component, vibrating component, etc. One skilled in the art will understand and appreciate that computer data may be presented in a number of ways, such as visually in a graphical user interface (GUI), audibly through speakers, wirelessly between computing devices 1300, across a wired connection, or in other ways. I/O ports 1318 allow computing device 1300 to be logically coupled to other devices including I/O components 1020, some of which may be built in. Example I/O components 1320 include, for example but without limitation, a microphone, joystick, game pad, satellite dish, scanner, printer, wireless device, etc.

Computing device 1300 may operate in a networked environment via the network component 1324 using logical connections to one or more remote computers. In some examples, the network component 1324 includes a network interface card and/or computer-executable instructions (e.g., a driver) for operating the network interface card. Communication between the computing device 1300 and other devices may occur using any protocol or mechanism over any wired or wireless connection. In some examples, network component 1324 is operable to communicate data over public, private, or hybrid (public and private) using a transfer protocol, between devices wirelessly using short range communication technologies (e.g., near-field communication (NFC), Bluetooth^{™} branded communications, or the like), or a combination thereof. Network component 1324 communicates over wireless communication link 1326 and/or a wired communication link 1326a to a remote resource 1328 (e.g., a cloud resource) across network 1330. Various different examples of communication links 1326 and 1326a include a wireless connection, a wired connection, and/or a dedicated link, and in some examples, at least a portion is routed through the internet.

Although described in connection with an example computing device 1300, examples of the disclosure are capable of implementation with numerous other general-purpose or special-purpose computing system environments, configurations, or devices. Examples of well-known computing systems, environments, and/or configurations that may be suitable for use with aspects of the disclosure include, but are not limited to, smart phones, mobile tablets, mobile computing devices, personal computers, server computers, hand-held or laptop devices, multiprocessor systems, gaming consoles, microprocessor-based systems, set top boxes, programmable consumer electronics, mobile telephones, mobile computing and/or communication devices in wearable or accessory form factors (e.g., watches, glasses, headsets, or earphones), network PCs, minicomputers, mainframe computers, distributed computing environments that include any of the above systems or devices, virtual reality (VR) devices, augmented reality (AR) devices, mixed reality devices, holographic device, and the like. Such systems or devices may accept input from the user in any way, including from input devices such as a keyboard or pointing device, via gesture input, proximity input (such as by hovering), and/or via voice input.

Examples of the disclosure may be described in the general context of computer-executable instructions, such as program modules, executed by one or more computers or other devices in software, firmware, hardware, or a combination thereof. The computer-executable instructions may be organized into one or more computer-executable components or modules. Generally, program modules include, but are not limited to, routines, programs, objects, components, and data structures that perform particular tasks or implement particular abstract data types. Aspects of the disclosure may be implemented with any number and organization of such components or modules. For example, aspects of the disclosure are not limited to the specific computer-executable instructions, or the specific components or modules illustrated in the figures and described herein. Other examples of the disclosure may include different computer-executable instructions or components having more or less functionality than illustrated and described herein. In examples involving a general-purpose computer, aspects of the disclosure transform the general-purpose computer into a special-purpose computing device when configured to execute the instructions described herein.

By way of example and not limitation, computer readable media comprise computer storage media and communication media. Computer storage media include volatile and nonvolatile, removable and non-removable memory implemented in any method or technology for storage of information such as computer readable instructions, data structures, program modules, or the like. Computer storage media are tangible and mutually exclusive to communication media. Computer storage media are implemented in hardware and exclude carrier waves and propagated signals. Computer storage media for purposes of this disclosure are not signals per se. Exemplary computer storage media include hard disks, flash drives, solid-state memory, phase change random-access memory (PRAM), static random-access memory (SRAM), dynamic random-access memory (DRAM), other types of random-access memory (RAM), read-only memory (ROM), electrically erasable programmable read-only memory (EEPROM), flash memory or other memory technology, compact disk read-only memory (CD-ROM), digital versatile disks (DVD) or other optical storage, magnetic cassettes, magnetic tape, magnetic disk storage or other magnetic storage devices, or any other non-transmission medium that may be used to store information for access by a computing device. In contrast, communication media typically embody computer readable instructions, data structures, program modules, or the like in a modulated data signal such as a carrier wave or other transport mechanism and include any information delivery media.

The order of execution or performance of the operations in examples of the disclosure illustrated and described herein is not essential, and may be performed in different sequential manners in various examples. For example, it is contemplated that executing or performing a particular operation before, contemporaneously with, or after another operation is within the scope of aspects of the disclosure. When introducing elements of aspects of the disclosure or the examples thereof, the articles "a," "an," "the," and "said" are intended to mean that there are one or more of the elements. The terms "comprising," "including," and "having" are intended to be inclusive and mean that there may be additional elements other than the listed elements. The term "exemplary" is intended to mean "an example of." The phrase "one or more of the following: A, B, and C" means "at least one of A and/or at least one of B and/or at least one of C."

Having described aspects of the disclosure in detail, it will be apparent that modifications and variations are possible without departing from the scope of aspects of the disclosure as defined in the appended claims. As various changes could be made in the above constructions, products, and methods without departing from the scope of aspects of the disclosure, it is intended that all matter contained in the above description and shown in the accompanying drawings shall be interpreted as illustrative and not in a limiting sense.

## Claims

1. A system, comprising:
a processor (1314); and
a memory (1312) including instructions executable by the processor to:
receive a multimodal prompt (104) including a media file (108) and information related to a region of interest (ROI) of the media file (110, 310, 410, 510);
determine the ROI (600) of the media file based on the information related to the ROI of the media file, wherein the ROI of the media file is smaller than a global version of the media file;
generate a plurality of media tiles of interest (MTIs) associated with the ROI of the media file (130b, 130c);
encode the MTIs together with a natural-language input received with the multimodal prompt to generate a modified prompt (732);
send the modified prompt to a large multimodal model (LMM) (136) to process the modified prompt; and
receive a response (140) to the modified prompt from the LMM.

2. The system of claim 1, wherein the information related to the ROI comprises one of:
defined ROI parameters; and
instructions for automatically determining the ROI of the media file using one or more ROI policies.

3. The system of claim 2, wherein the defined ROI parameters includes one of:
mask information defining the ROI of the media file; and
coordinate information defining the ROI of the media file.

4. The system of claim 2 or claim 3, further comprising instructions executable by the processor to:
apply the defined ROI parameters to a global tile associated with the media file to determine the ROI of the media file; and
generate the plurality of MTIs based on the determined ROI.

5. The system of any of claims 2 to 4 further comprising instructions executable by the processor to:
access a view composer policy storing a plurality of rules, wherein at least some of the plurality of rules instruct the view composer to exclude low-value regions of the media file in the ROI;
apply the plurality of rules to a global tile associated with the media file to determine the ROI of the media file; and
generate the plurality of MTIs based on the determined ROI.

6. The system of claim 5, wherein:
the media file is an image file; and
at least some of the low-value regions are defined as a region of the global media tile containing little-to-no contrast in color or texture.

7. The system of any previous claim, wherein:
the media file is an image file; and
the memory further comprises instructions executable by the processor to present the response via a user interface, the response being a natural-language description of the image depicted in the image file.

8. A method for processing a multimodal prompt, comprising:
receiving a multimodal prompt (104) including a media file (108) and information related to a region of interest (ROI) of the media file (110, 310, 410, 510);
determining the ROI (600) of the media file based on the information related to the media file, wherein the ROI of the media file is smaller than a global version of the media file;
generating a plurality of media tiles of interest (MTIs) associated with the ROI of the media file (130b, 130c);
encoding the MTIs together with a natural-language input received with the multimodal prompt to generate a modified prompt (732); and
sending the modified prompt to a large multimodal model (LMM) (136) to process the modified prompt; and
receiving a response (140) to the modified prompt from the LMM.

9. The method of claim 8, wherein the information related to the ROI comprises one of:
defined ROI parameters; and
instructions for automatically determining the ROI of the media file using one or more ROI policies.

10. The method of claim 9, wherein the defined ROI parameters includes one of:
mask information defining the ROI of the media file; and
coordinate information defining the ROI of the media file.

11. The method of claim 9 or claim 10 wherein, in response to determining that the information related to the ROI comprises the defined ROI parameters, the method further includes:
applying the defined ROI parameters to a global tile associated with the media file to determine the ROI of the media file; and
generating the plurality of MTIs based on the determined ROI.

12. The method of any of claims 9 to 11 wherein, in response to determining that the information related to the ROI comprises the instructions for performing ROI auto mode, the method further comprises:
accessing a view composer policy storing a plurality of rules, wherein at least some of the plurality of rules instruct the view composer to exclude low-value regions of the media file in the ROI;
applying the plurality of rules to a global tile associated with the media file to determine the ROI of the media file; and
generating the plurality of MTIs based on the determined ROI.

13. The method of claim 12, wherein:
the media file is an image file; and
at least some of the low-value regions are defined as a region of the global media tile containing little-to-no contrast in color or texture.

14. The method of any of claims 9 to 13, wherein:
the media file is an image file; and
the method further includes displaying the response via a user interface, the response being a natural-language description of the image depicted in the image file.

15. A computer-readable medium storing instructions that are operative upon execution by a processor to:
receive, at a large multimodal model (LMM) orchestrator (112), a multimodal prompt (104) including a media file (108), a natural-language input (106), and information related to a region of interest (ROI) of the media file (110, 310, 410, 510);
determine, by a view composer (114), the ROI (600) of the media file based on the information related to the ROI of the media file, wherein the ROI of the media file is smaller than a global version of the media file;
generate, by the view composer, a global media tile (130a) and a plurality of media tiles of interest (MTIs) (130b, 130c) associated with the ROI;
send, by the LMM orchestrator, the global media tile and the plurality of MTIs generated by the view composer to a media encoder (132);
receive, by the LMM orchestrator, a plurality of media tokens (730) generated from the global media tile and the plurality of MTIs from the media encoder;
encode, by the LMM orchestrator, the natural-language input to generate a text token (706) associated with the natural-language input;
generate, by the LMM orchestrator, a modified prompt (732) including the plurality of media tokens and the text token;
send, by the LMM orchestrator, the modified prompt to the LMM (136) to process the modified prompt according to the plurality of media tokens and the text token; and
receive, by the LMM orchestrator, a response (140) to the modified prompt from the LMM.
